# EUROPEAN PATENT APPLICATION

(11) **EP 1 985 925 A2**
(43) Date of publication of application: **29.10.2008**
(21) Application number: 08151854.0
(22) Date of filing: 22.02.2008
(51) Int. Cl.: F23R 3/14, F23R 3/28

(54) **Methods and systems to facilitate operating within flame-holding margin**

(30) Priority: 27.04.2007 US 741454
(71) Applicant: GENERAL ELECTRIC COMPANY, Schenectady, NY 12345 (US)
(72) Inventor: Kraemer, Gilbert Otto, Greer, SC 29650 (US); Lacy, Benjamin Paul, Greer, SC 29650 (US); Varatharajan, Balachandar, Clifton Park, NY 12065 (US); Yilmaz, Ertan, Albany, NY 12205 (US)
(74) Representative: Illingworth-Law, William Illingworth

(57) **Abstract**

A system to facilitate operating within flame-holding margins in a turbine engine, is provided. The system includes at least one swirler segment coupled within the fuel nozzle of the turbine engine, the at least one swirler segment includes at least one vane extending between an inner band (50) and an outer band (40), a design fuel from a fuel source, at least one fuel injection orifice defined in a surface of the at least one vane, the at least one fuel injection orifice designed to optimize turbine performance using the design fuel, a non-design fuel channeled through the at least one fuel injection orifice into a compressed fluid flow to establish a jet penetration height, and an operating window (110) to facilitate reducing the jet penetration height and to facilitate increasing the flame-holding margins.

## Description

### BACKGROUND OF THE INVENTION

This invention relates generally to turbine assemblies, and more particularly, to methods and systems to facilitate controlling flame-holding margins during turbine operation.

Generally, turbine assemblies used in power generation systems are designed for use with a particular fuel. More specifically, known turbines are designed to achieve mandated nitrous oxide (NOx) emission levels when operating. However, as the cost of gaseous fuels has increased, while gas fuel supplies have become more difficult to secure, at least some known turbines have had to operate with alternative fuels.

At least some known methods of operating turbine assemblies economize fuel consumption by increasing the temperature of the fuel supplied to the turbines using waste heat. By increasing the temperature of the fuel supplied to the turbine, less energy is required to bring the fuel to a turbine operating temperature. For example, in a turbine having an operating temperature of 2500° F, fuel having an initial temperature of 100° F is heated to between about 300 to 400° F using waste heat, and then additional energy is required to heat the fuel to the 2,500° F operating temperature. Thus, pre-heating the fuel using waste heat facilitates decreasing the quantity of energy necessary to reach an exhaust temperature that produces a corresponding desired amount of power.

Using these methods with non-design gas fuels may decrease the fuel nozzle's flame-holding margins below the desired allowable limits. Flame holding may damage the fuel nozzle, creating hot streaks that exceed the local maximum operating temperature of turbine engines, thus causing turbines to fail. Moreover, exceeding flame-holding margins may also limit the useful life of the fuel nozzles and/or may cause damage to the combustor lining.

### BRIEF DESCRIPTION OF THE INVENTION

In one embodiment, a method to facilitate operating within flame-holding margins in a turbine engine is provided. The method includes coupling at least one turbine nozzle segment within the turbine engine, wherein the at least one turbine nozzle segment includes at least one vane extending between an inner band and an outer band. The method also includes positioning at least one fuel injection orifice in a surface of the at least one vane, channeling a fuel through the at least one fuel injection orifice into a compressed fluid flow to establish a jet penetration height, and defining an operating window by adjusting an operating parameter of the fuel to reduce the jet penetration height and to facilitate increasing the flame-holding margins.

In another exemplary embodiment, a system to facilitate operating within flame-holding margins in a turbine engine is provided. The system includes at least one turbine nozzle segment coupled within the turbine engine, where the at least one turbine nozzle segment includes at least one vane extending between an inner band and an outer band. The system also includes a design fuel from a fuel source, at least one fuel injection orifice defined in a surface of the at least one vane, where the at least one fuel injection orifice is designed to optimize turbine performance using the design fuel. A non-design fuel is channeled through the at least one fuel injection orifice into a compressed fluid flow to establish a jet penetration height, and an operating window facilitates reducing the jet penetration height and facilitates increasing the flame-holding margins.

In yet another exemplary embodiment, a turbine engine is disclosed. The turbine engine includes a nozzle assembly including an inner band, an outer band, and at least one vane extending between the inner band and the outer band. The vane includes a plurality of fuel injection orifices designed to optimize performance using a design fuel and are configured to channel a non-design fuel therefrom to facilitate controlling flame-holding margins.

### BRIEF DESCRIPTION OF THE DRAWINGS

Embodiments of the present invention will now be described, by way of example only, with reference to the accompanying drawings, in which:

Figure 1 is a perspective cross-sectional view of an exemplary turbine nozzle assembly;

Figure 2 is an enlarged perspective view of a swirler assembly used in the turbine nozzle assembly shown in Figure 1;

Figure 3 is an enlarged perspective view of a portion of the swirler assembly shown in Figure 2;

Figure 4 is an enlarged cross-sectional view of an exemplary fuel jet and flame-holding margin;

Figure 5 is a schematic diagram of an exemplary operating window for operating a nozzle assembly with a non-design gas fuel; and

Figure 6 is a schematic diagram of an alternate operating window for operating a nozzle assembly with the same non-design gas fuel used in Figure 5.

### DETAILED DESCRIPTION OF THE INVENTION

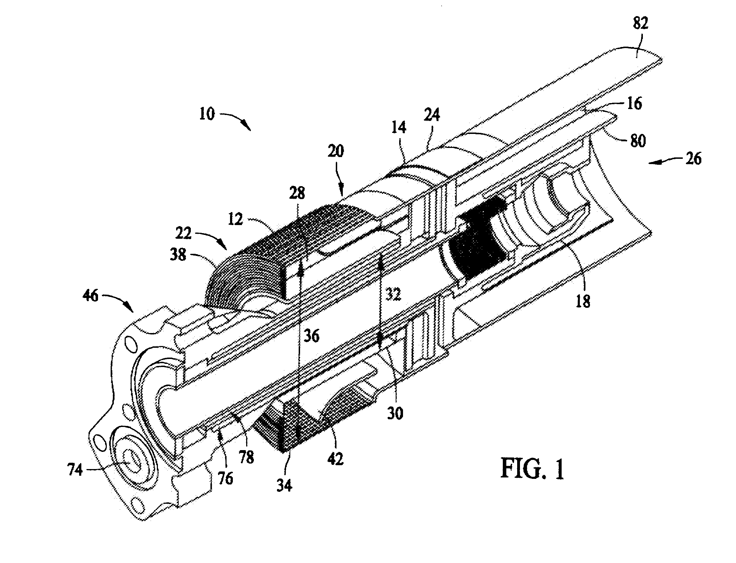

Figure 1 is a cross-sectional view of an exemplary nozzle assembly 10. In the exemplary embodiment, nozzle assembly 10 is divided into four regions by function including an inlet flow conditioner (IFC) 12, a swirler assembly 14 with fuel injection, an annular fuel fluid mixing passage 16, and a central diffusion flame fuel nozzle assembly 18. Nozzle assembly 10 also includes a high pressure plenum 20 having an inlet end 22 and a discharge end 24. High pressure plenum 20 circumscribes nozzle assembly 10. Discharge end 24 does not circumscribe nozzle assembly 10, but rather discharge end 24 extends into a combustor reaction zone 26. IFC 12 includes an annular flow passage 28 that is defined by a solid cylindrical wall 30. Wall 30 defines an inside diameter 32 for passage 28, and a perforated cylindrical outer wall 34 defines an outside diameter 36. A perforated end cap 38 is coupled to an upstream end 40 of nozzle assembly 10. In the exemplary embodiment, flow passage 28 includes one or more annular turning vanes 42. During operation, compressed fluid enters IFC 12 via perforations in end cap 38 and cylindrical outer wall 30. Moreover, it should be understood that in the exemplary embodiment nozzle assembly 10 defines a premix gas fuel circuit that enables design gas fuel and compressed fluid to be mixed prior to combustion.

As used herein the term "design gas fuel" is the particular gas fuel originally selected to enable a corresponding turbine engine to achieve a demand power output by design. Non-design gas fuels may also be used to power turbine engines and are different from design gas fuels. In the exemplary embodiment, the design gas fuel is a methane-based gas. However, it should be appreciated that in other embodiments the design gas fuel may be any gas fuel that facilitates powering a turbine engine as described herein. In the exemplary embodiment, non-design gas fuels include no-methane based gas fuels, such as, but not limited to, liquefied naural gas (LGN), non-design gas fuels and process gas fuels.

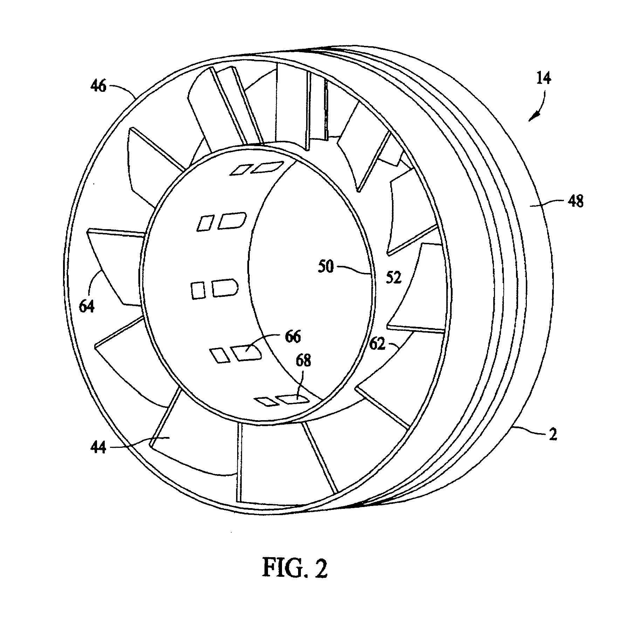

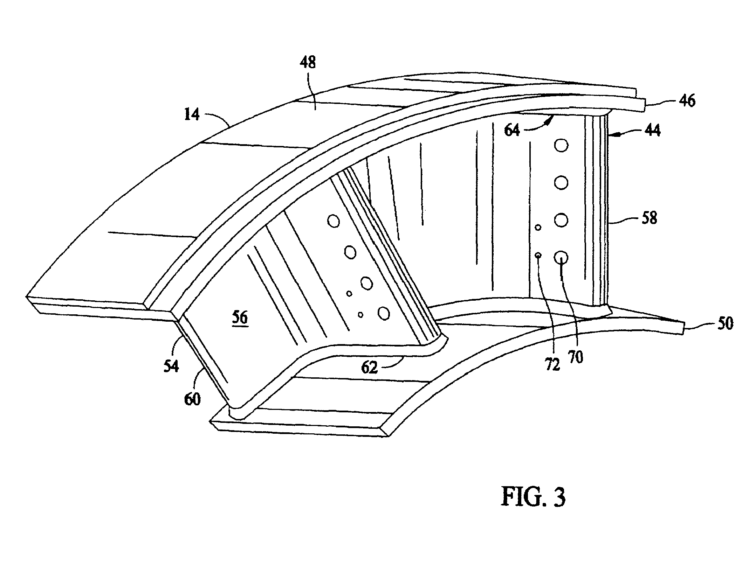

Figure 2 is an enlarged perspective view of an exemplary swirler assembly 14 that may be used with nozzle assembly 10 (shown in Figure 1). Figure 3 is an enlarged perspective view of a portion of swirler assembly 14. Swirler assembly 14 includes a plurality of vanes 44 that each extend between a radially outer band 46, having an outer surface 48, and a radially inner band 50, having an outer surface 52. Each vane 44 includes a suction sidewall 54 and a pressure sidewall 56. Suction sidewall 54 is convex and defines a suction side of vane 44, and pressure sidewall 56 is concave and defines a pressure side of vane 44. Sidewalls 54 and 56 are joined at a leading edge 58 and at an axially-spaced trailing edge 60 of vanes 44.

Suction and pressure sidewalls 54 and 56, respectively, extend longitudinally, in span between radially inner band 50 and radially outer band 46. A vane root 62 is defined as being adjacent inner band 50, and a vane tip 64 is defined as being adjacent outer band 46.

It should be understood that turning vanes 44 impart swirl to compressed fluid passing through swirler assembly 14. Moreover, turning vanes 44 each include a primary fuel supply passage 66 and a secondary fuel supply passage 68 defined in a core (not shown) of each vane 44. In the exemplary embodiment, each vane pressure side 56 includes a plurality of gas fuel injection orifices 70 and a plurality of secondary gas fuel injection orifices 72. In the exemplary embodiment, orifices 70 and 72 each have a substantially circular shape, and orifices 70 have a larger cross-sectional area than orifices 72. It should be understood that primary injection orifices 70 and secondary injection orifices 72 penetrate pressure sidewall 56 of each vane 44. Moreover, it should be appreciated that in other embodiments, fuel injection orifices 70 and 72 may be located on vane suction side 54, or on both pressure and suction sides 56 and 54, respectively. Furthermore, although orifices 70 and 72 are described as having a substantially circular shape, in other embodiments, orifices 70 and 72 may have any shape, orientation, or configuration that enables nozzle assembly 10 to function as described herein.

During operation, primary fuel passage 66 and secondary fuel passage 68 distribute gas fuel to primary injection orifices 70 and secondary injection orifices 72, respectively. Gas fuel enters swirler assembly 14 through inlet port 74 (shown in Figure 1) and annular premix gas fuel passages 76 and 78 (shown in Figure 1). Annular premix gas fuel passages 76 and 78 supply primary 66 and secondary 68 fuel supply passages, respectively. The gas fuel mixes with compressed fluid in swirler assembly 14, and fuel/air mixing is completed in annular premix passage 16 (shown in Figure 1). Passage 16 is defined by a nozzle hub extension 80 (shown in Figure 1) and a nozzle shroud extension 82 (shown in Figure 1). It should be appreciated that most of the compressed fluid for combustion enters nozzle assembly 10 via IFC 12, and is channeled through swirler assembly 14 after exiting IFC 12. After exiting annular premix passage 16, the fuel/air mixture enters combustor reaction zone 26 wherein the mixture is ignited. It should be understood that there are a plurality of nozzle assemblies 10 in an annular array about a turbine housing (not shown). It should also be appreciated that the term "fluid" as used herein includes any medium or material that flows, including, but not limited to, gas and air.

Premix nozzle assembly 10 operates as a "soft fuel nozzle." As used herein the term "soft fuel nozzle" refers to combustion pressure waves that may feed back into fuel passages 76 and 78 (shown in Figure 1). Thus, in the exemplary embodiment, a fuel nozzle pressure ratio, defined as the fuel supply pressure divided by the combustor pressure, is less than about 1.07 to 1.10. Above such a pressure ratio range, nozzle assembly 10 is called a "hard fuel nozzle" and damaging dynamics may be produced. Another type of damaging dynamics may be produced when the fuel nozzle pressure ratio is below an acceptable minimum fuel nozzle pressure ratio. Such damaging dynamics are capable of quickly ruining a turbine engine. Thus, in the exemplary embodiment, a safe fuel nozzle pressure ratio range is between the minimum fuel pressure ratio and 1.07 to 1.10. It should be understood that altering the non-design gas fuel temperature may influence dynamics development.

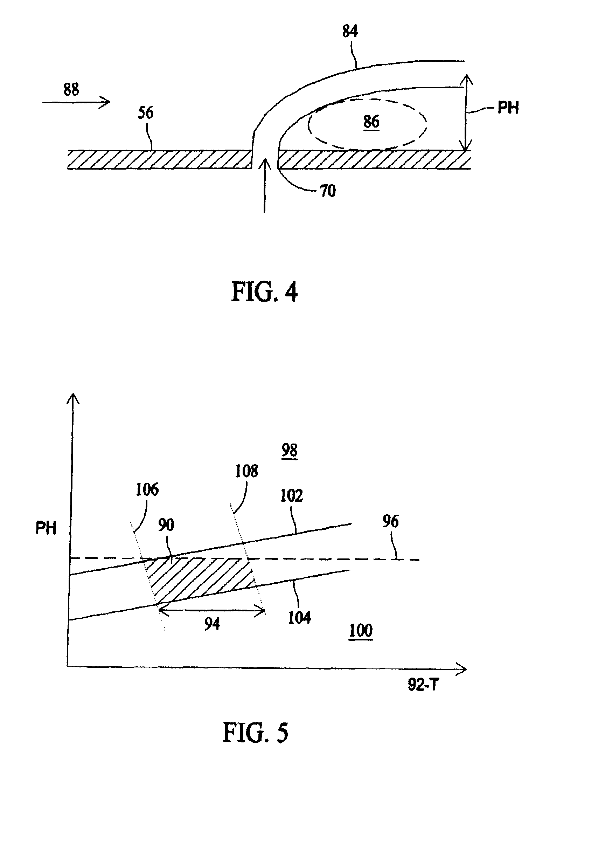

Figure 4 is an enlarged cross-sectional view of an exemplary gas fuel jet 84 and a corresponding flame-holding margin 86. As non-design gas fuel is injected through primary fuel injection orifice 70 in an injection angle that is substantially perpendicular to pressure side 56, the non-design fuel forms fuel jet 84. As fuel jet 84 exits orifice 70, it encounters rapidly-moving, compressed fluid cross-flow 88 which forces fuel jet 84 to flow substantially parallel to pressure side 56. Once configured, fuel jet 84 engenders flame-holding margin 86 development. It should be appreciated that fuel jet 84 flows substantially parallel to pressure side 56 and is distanced from pressure side 56 by a penetration height PH. Penetration height PH represents the relative, maximum non-design gas fuel jet penetration height into compressed fluid cross-flow 88. By reducing non-design gas fuel jet penetration height PH and by reducing non-design gas fuel reactivity relative to design gas fuel reactivity, flame-holding margin 86 may be stabilized, substantially reduced, or eliminated. It should be appreciated that non-design gas fuel may also be projected onto non-vane 44 surfaces such as, but not limited to, an outer band inner surface 47 (shown in Figure 2) and outer surface 52 (shown in Figure 2), which may also cause flame holding, flashback, or both. If the momentum of fuel jet 84 is not within an acceptable range, a flow disturbance (not shown) may develop that causes a separation in the downstream swirler assembly 14.

Figure 5 is a schematic diagram showing an exemplary operating window 90 for non-design gas fuels in premix nozzle assembly 10. More specifically, operating window 90 is shown as a function of penetration height PH, temperature 92, and fuel nozzle pressure ratio range 94. In the exemplary embodiment, operating window 90 defines a regime specific to the non-design gas fuel used to facilitate preventing negative effects of flame-holding.

Penetration height PH is proportional to ((ρ_{fuel}×V²_{fuel})/ (ρₐᵢᵣ×V²ₐᵢᵣ))^{1/2}, where ρ_{fuel} is the density of the non-design gas fuel, V_{fuel} is the velocity of the non-design gas fuel, ρₐᵢᵣ is the density of compressed fluid cross-flow 88 (shown in Figure 4), and Vₐᵢᵣ is the mean velocity of compressed fluid cross-flow 88. Additionally, the mass flow rate of a gas fuel is given by ρ×A×V, where ρ is the density of the gas fuel, A is the effective cross-sectional area of fuel injection orifice 70 or 72 (shown in Figure 3), and V is the velocity of the gas fuel. By manipulating the parameters (ρ_{fuel}, V_{fuel}, ρₐᵢᵣ, Vₐᵢᵣ) that determine penetration height PH, and the parameters (p, A, V) that determine the mass flow rate, a plurality of different operating windows 90 may be generated for each non-design gas fuel. The fuel nozzle pressure ratio, defined as the fuel supply pressure divided by the combustor pressure, is another parameter that facilitates determining or generating operating window 90. The fuel nozzle pressure ratio may be adjusted by manipulating the gas fuel supply pressure which also allows manipulating or redefining fuel nozzle pressure ratio range 94; however, it should be appreciated that heating of the non-design gas fuel may be required.

Operating window 90 may also be altered by changing the density of non-design gas fuel by manipulating the non-design gas fuel temperature 92. By cooling the non-design gas fuel, more non-design gas fuel is able to flow through nozzle assembly 10 while remaining within fuel nozzle pressure ratio (FNPR) range 94 which is defined by the area enclosed by lines 102, 104, 106 and 108. Likewise, changing the density of non-design gas fuel by increasing its temperature 92, causes less non-design gas fuel to flow through nozzle assembly 10 while remaining within fuel nozzle pressure ratio (FNPR) range 94. It should be understood that increasing the non-design gas fuel temperature 92, not only decreases the fuel density, but also decreases the non-design gas fuel velocity. Decreasing the non-design gas fuel velocity also causes a related gas fuel pressure drop. In the exemplary embodiment, it is desirable to provide a cooler, non-design fuel that remains within fuel nozzle pressure ratio range 94, to satisfy combustion dynamic requirements while still providing enough fuel for desired turbine engine output; however heating the non-design fuel may be required. Changing the fuel temperature enables the non-design fuel to operate at the desired range of engine output. In addition, changing the fuel temperature can also facilitate increasing the range of power output allowable for the design fuel. For example, cooling the fuel temperature can reduce fuel reactivity which facilitates reducing flame holding and auto-ignition propensity, thus providing additional operating margin.

A flame-holding margin boundary 96 distinguishes between a flame-holding region 98 above boundary 96, and a non-flame-holding region 100 below boundary 96. It should be appreciated that flame-holding margin boundary 96 is fuel specific and depends on the reactivity of the non-design gas fuel used, and as such is different for every type of non-design gas fuel. Flame-holding region 98 indicates that there is a flame-holding margin 86 and non-flame-holding region 100 indicates that there is no flame-holding margin 86. In the exemplary embodiment, thermal temperature lines of a non-design gas fuel including fifty percent hydrogen (H2) and fifty percent carbon monoxide (CO), at two different temperatures, are also illustrated. More specifically, a first thermal temperature line 102 represents a non-design gas fuel having a temperature 92 of about 300° F. A second thermal temperature line 104 represents the same non-design gas fuel at a temperature 92 of about 80° F. Moreover, fuel nozzle pressure ratio range 94 is defined by a lower pressure ratio limit 106 and an upper pressure ratio limit 108.

The area below boundary 96 that is above thermal temperature line 102 and is also within fuel pressure ratio range 94, defines an operating window 90 corresponding to a turbine engine using the given non-design gas at a temperature 92 of about 300° F. Likewise, the area below boundary 96, that is between boundary 96 and thermal temperature line 104, and that is also within fuel pressure ratio range 94, defines an operating window 90 for a turbine engine using the given non-design gas at a temperature 92 of about 80⁰ F. As can be seen by comparing thermal temperature lines 102 and 104, using lower temperature non-design gas facilitates decreasing jet penetration height PH by about a third. Thus, it can be seen that cooling the temperature 92 of non-design gas fuels facilitates reducing penetration height PH and substantially reduces or eliminates flame-holding margin 86. Because cooling non-design gas fuels reduces the fuel momentum ratio and produces a cooler jet with a lower jet penetration height PH, flame-holding margin 86 is facilitated to be decreased.

It should be understood that for fuel orifices having fixed geometries, such as fuel injection orifices 70 and 72, pressure is proportional to (V²_{fuel}×ρ_{fuel})/2, where V_{fuel} is the velocity of the non-design gas fuel and ρ_{fuel} is the non-design gas fuel density. Thus, a fuel having a high volumetric flow requirement, such as a low Modified Wobbe Index (MWI) non-design gas fuel, may be sufficiently cooled to generate the same power output as the design gas, such that turbine engines with design gas fuel nozzles may operate as "soft fuel nozzles" using low MWI non-design gas fuels. It should be appreciated that the Wobbe Index is usually the heat content (LHV) divided by the square root of the molecular weight ratio. The Modified Wobbe Index (MWI) assumes that the gases are at different temperatures and the units would have a square root of absolute temperature. As used herein, a low MWI non-design gas fuel ranges from about 15 to 70, which is different than an MWI design gas. Methane-based natural gas fuels generally have an MWI of about 39 to 55 depending on fuel temperature and composition. Furthermore, it should be appreciated that the increased load of a turbine engine is satisfied by increasing the flame temperature. To satisfy increased turbine engine loading, a temperature 92 range for a non-design gas fuel may be decreased for one or more fuels with different MWI, due to the fuel pressure ratio.

It should be appreciated that in the exemplary embodiment non-design gas fuel is provided to turbine engines through underground pipelines, thus ensuring a relatively constant, cool, non-design gas fuel supply. However, in other embodiments, any means may be employed to cool non-design gas fuel such that nozzle assembly 10 functions as described herein. Moreover, it should be appreciated that although the exemplary embodiment is described as a cooled, non-design gas fuel, in other embodiments, various compositions of non-design gas fuels may be used, and depending on the composition of non-design gas used, such fuels may be heated or cooled such that turbine engines with design gas fuel nozzles operate as "soft fuel nozzles." When cooling the non-design gas fuel, proper consideration of the dew point for condensation and Joule-Thompson effect in valves should be considered which may limit the lower temperature or require reduction in concentration of some fuel constituents for cooling or both. It should be appreciated that cooling non-design gas fuel reduces the fuel's reactivity and potentially decreases flame holding an auto-ignition.

It should be understood that some non-design gas fuels have a higher volumetric flow rate requiring larger fuel injection orifices than is permitted for existing design gas fuel operation. Consequently, operating turbines with non-design gas fuels having a higher MWI may require heating during premixing operations in nozzle assembly 10 with one premixed fuel passage, 76 or 78 (shown in Figure 1), per fuel nozzle assembly 10, to facilitate maintaining the minimum allowable fuel nozzle pressure ratio and not to "flame-hold" with fuels having lower MWI indexes. As used herein, a high MWI non-design gas fuel has a higher MWI than design gas.

It should be appreciated that controlling flame-holding margin 86 facilitates using non-design fuels that facilitate reducing nitrous oxide (NOx) emissions. More specifically, because controlling flame-holding margin 86 allows using a wider variety of non-design gas fuels, non-design gas fuels that inherently or more effectively reduce NOx and CO emissions when burned, may be used for combustor designs. For example, if a non-design gas fuel produces one part per million NOx when burned and the design gas fuel produces five parts per million NOx when burned, it may be better to operate a turbine engine using non-design gas fuel to reduce NOx emissions. Moreover, it should be appreciated that the design gas fuel may be heated to improve penetration, improve fuel mixing to decrease NOx emissions and reduce damaging dynamics.

It is desirable to increase the fuel flexibility of turbine engines by operating turbine engines with less expensive, and more readily-available alternative non-design gas fuels, rather than design gas fuels. Such alternative non-design gas fuels include, but are not limited to, liquefied naural gas (LGN), syngas and process gas. Using alternative fuels requires providing sufficient flame-holding margin in premixed fuel nozzles. It should be appreciated that controlling jet penetration height produces acceptable flame-holding margin for operation on a single fuel passage and extends flame-holding margins.

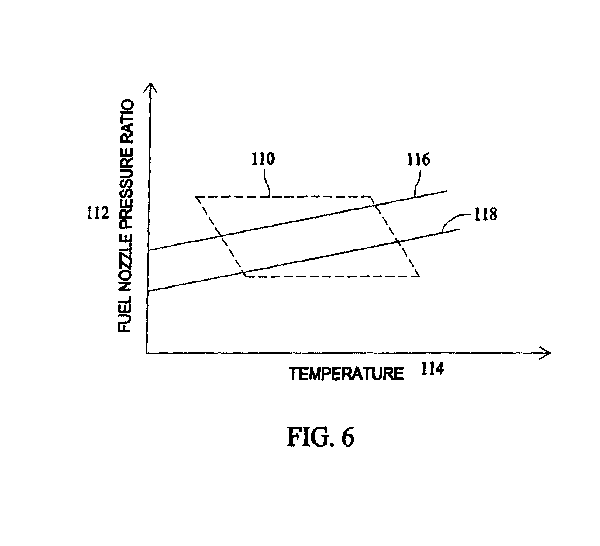

Figure 6 is a schematic diagram showing an alternative exemplary operating window 110 for non-design gas fuel in diffusion nozzle assemblies (not shown). Diffusion nozzle assemblies mix non-design gas fuel and compressed fluid, and ignite the combination where it is mixed. Operating window 110 is shown as a function of fuel nozzle pressure ratio 112 and fuel nozzle flame temperature 114. It should be understood that operating window 110 defines a regime specific to the non-design gas fuel used to facilitate preventing the negative effects of flame-holding.

Thermal temperature lines of a non-design gas fuel including fifty percent hydrogen (H2) and fifty percent carbon monoxide (CO), at two different temperatures, are also illustrated. More specifically, a first thermal temperature line 116 represents a non-design gas fuel having a temperature of about 300° F. A second thermal temperature line 118 represents the same non-design gas fuel at a temperature of about 80° F. In the exemplary embodiment, operating window 110 indicates the minimum and maximum pressure ratio over which combustion dynamics are acceptable for diffusion nozzle assemblies. Increasing the fuel temperature decreases the fuel density such that fuel jet 84 velocity increases for the same non-design gas fuel flow to deliver the same mass of fuel to a combustion chamber. It should be understood that operating within operating window 110 provides adequate turbine engine power and does not engender development of damaging dynamics.

In each embodiment, the above-described methods of controlling flame-holding margins facilitate increasing the range of fuel compositions that can be safely used in existing turbine engines with a reduced-cost, single-premixed circuit. Moreover, existing turbine engines may operate with different fuels without requiring installation of new fuel nozzles. Furthermore, non-design gas fuel heating and cooling circuits could be integrated into systems for minimizing cycle losses. Such circuits may include heating non-design gas fuel in an exhaust stack and cooling non-design gas fuel with make up water. More specifically, in each embodiment, changing the fuel temperature and operating within a fuel pressure ratio range, stabilizes, substantially reduces or eliminates flame-holding margins. As a result, fuel flexibility of existing turbine engines and operation of existing turbine engines with a single fuel circuit are provided. Accordingly, turbine performance and component useful life are each facilitated to be enhanced in a cost-effective and reliable manner.

Exemplary embodiments of methods for controlling flame-holding margins are described above in detail. The methods are not limited to use with the specific turbine embodiments described herein, but rather, the methods can be utilized independently and separately from other components described herein. For example, the methods may be used with any utility, industrial or mechanical drive turbine. Moreover, the invention is not limited to the embodiments of the method described above in detail. Rather, other variations of the method may be utilized within the spirit and scope of the claims.

While the invention has been described in terms of various specific embodiments, those skilled in the art will recognize that the invention can be practiced with modification within the spirit and scope of the claims.

## Claims

1. A system to facilitate operating within flame-holding margins in a turbine engine, said system comprising:
at least one turbine nozzle segment coupled within the turbine engine, said at least one turbine nozzle segment comprises at least one vane extending between an inner band (50) and an outer band (40);
a design fuel from a fuel source;
at least one fuel injection orifice defined in a surface of the at least one vane, said at least one fuel injection orifice designed to optimize turbine performance using said design fuel;
a non-design fuel channeled through the at least one fuel injection orifice into a compressed fluid flow to establish a jet penetration height; and
an operating window (110) to facilitate reducing the jet penetration height and to facilitate increasing the flame-holding margins.

2. A system in accordance with Claim 1, wherein said operating window (110) is established by adjusting an operating parameter of said non-design fuel.

3. A system in accordance with Claim 1 or Claim 2, wherein said operating window (110) is defined by adjusting a density of said non-design fuel by changing a temperature of said non-design fuel.

4. A system in accordance with Claim 3, wherein the temperature is reduced to adjust a non-design fuel momentum ratio.

5. A system in accordance with any one of the preceding Claims, wherein said operating window (110) is defined by adjusting a fuel nozzle pressure ratio range by changing a pressure of said non-design fuel.

6. A system in accordance with any one of the preceding Claims, wherein said non-design fuel has a modified wobbe index lower than a modified wobbe index of the design fuel.

7. A method in accordance with any one of the preceding Claims, wherein said non-design fuel is heated and has a higher modified wobbe index than the design fuel.

8. A method in accordance with any one of the preceding Claims, wherein said non-design fuel is at least one of liquefied naural gas, syngas and process gas.

9. A turbine engine comprising a nozzle assembly (18) comprising an inner band (50), an outer band (46), and at least one vane (42,44) extending between said inner band and said outer band, said vane comprising a plurality of fuel injection orifices (70) designed to optimize performance using a design fuel and configured to channel a non-design fuel therefrom to facilitate controlling flame-holding margins.

10. A turbine engine in accordance with Claim 9, wherein said inner band (46) comprises at least one fuel supply passage (66) configured to supply said non-design fuel to at least one of said plurality of fuel injection orifices (70).
